# DEMANDE DE BREVET EUROPEEN

(11) **EP 1 757 478 A1**
(43) Date de publication de la demande: **28.02.2007**
(21) Numéro de dépôt: 06300811.4
(22) Date de dépôt: 19.07.2006
(51) Int. Cl.: B60J 3/02

(54) **Pare-soleil pour véhicule automobile**

(30) Priorité: 23.08.2005 FR 0552547
(71) Demandeur: Renault s.a.s., 92100 Boulogne Billancourt (FR)
(72) Inventeur: Vilatte, Jean René, 78960, VOISINS LE BRETONNEUX (FR); Hewak, Gregor, 95490 Vaureal (FR)

(57) **Abrégé**

Pare-soleil (1) pour véhicule automobile (10) :
- monté mobile autour d'au moins un axe (D) positionné transversalement dans le véhicule (10)
-entre une position de rangement dans laquelle le pare-soleil (1) est hors du champ de vision du passager du véhicule (10),
- et une position d'utilisation dans laquelle le pare-soleil (1) est dans le champ de vision du passager du véhicule (10),
- comportant une surface intérieure (3) et une surface extérieure (2),
- comportant un compartiment de rangement (5), qui dispose d'un fond (4) et d'une ouverture (6),

caractérisé en ce que le fond (4) est transparent afin de rendre visible depuis l'extérieur du véhicule (10) un objet introduit dans le compartiment de rangement (5).

## Description

L'invention concerne un pare-soleil pour véhicule automobile:
- monté mobile autour d'au moins un axe positionné transversalement dans le véhicule
- entre une position de rangement dans laquelle le pare-soleil est hors du champ de vision du passager du véhicule et
- une position d'utilisation dans laquelle le pare-soleil est dans le champ de vision du passager du véhicule,
- comportant une surface intérieure et une surface extérieure,
- comportant un compartiment de rangement, qui dispose d'un fond et d'une ouverture.

Le brevet EP0622272 présente un pare-soleil comportant sur une des surfaces un miroir de courtoisie recouvert d'un couvercle escamotable et sur l'autre face un compartiment de rangement avec un couvercle escamotable. Le miroir peut être utilisé quand le pare-soleil est en position d'utilisation. Le compartiment de rangement est réalisé de manière à être accessible lorsque le pare-soleil est en position de non utilisation. La porte de rangement étant articulée à proximité de l'axe supérieur, l'ouverture accidentelle de la porte produira la chute des objets placés dans le compartiment de rangement.

De plus, le pare-soleil n'est pas prévu pour rendre visible un élément particulier tel qu'un ticket d'abonnement qui doit être visible au niveau du pare-brise.

Afin de pallier ces inconvénients, l'invention a pour objet un pare-soleil comportant un moyen de réception d'un élément devant être affiché contre le pare-brise.

L'invention a également pour objet un rangement accessible en position d'utilisation.

A cet effet, l'invention propose un pare-soleil du type cité ci-dessus, caractérisé en ce que le fond est transparent afin de rendre visible depuis l'extérieur du véhicule un objet introduit dans le compartiment de rangement.

Selon d'autres caractéristiques de l'invention, le fond du compartiment de rangement est la partie transparente.

Selon d'autres caractéristiques de l'invention, le fond du compartiment de rangement constitue une partie de la surface extérieure.

Selon d'autres caractéristiques de l'invention, le fond (4) du compartiment de rangement constitue une partie de la surface extérieure.

Selon d'autres caractéristiques de l'invention, le miroir a un mouvement de coulissement de façon à ouvrir ou fermer l'accès au compartiment de rangement.

Selon d'autres caractéristiques de l'invention, qu'un couvercle est destiné à recouvrir le miroir lorsque le miroir est en position de non utilisation.

Selon d'autres caractéristiques de l'invention, le couvercle a un mouvement de coulissement de façon à accéder ou non au miroir.

D'autres caractéristiques et avantages de l'invention apparaîtront à la lecture de la description d'un mode de réalisation en référence aux figures annexées 1 à 3.

La figure 1 représente une vue générale d'un véhicule automobile comportant un pare-soleil selon l'invention.

La figure 2 représente une vue en perspective de la surface intérieure du pare-soleil comportant un miroir de courtoisie.

La figure 3 représente une vue en perspective de la surface extérieure du pare-soleil.

Des éléments identiques ou analogues sont désignés par les mêmes chiffres de référence.

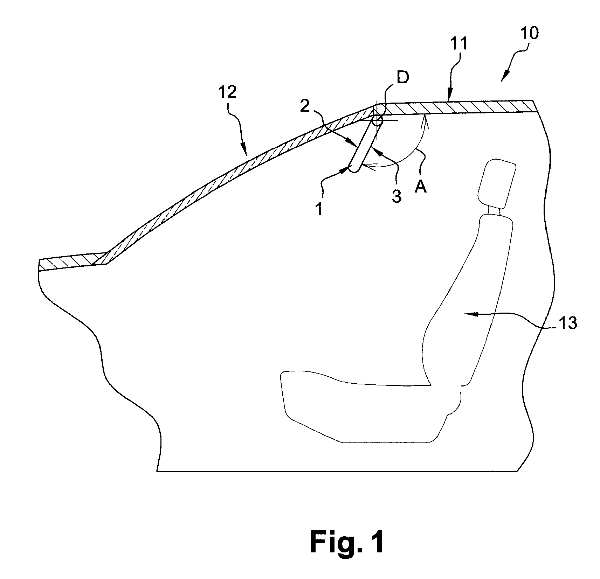

Dans un mode de réalisation, tel que représenté à la figure 1, un véhicule 10 comporte en particulier un pavillon 11, un pare-brise 12, au moins un siège 13 et un pare-soleil 1. Ce pare-soleil 1 est de forme générale parallélépipédique et est monté mobile autour d'un axe D positionné transversalement dans le véhicule à proximité de la partie supérieure du pare-brise 12. Ce pare-soleil 1 est mobile entre une position de rangement et une position d'utilisation et il comporte une surface extérieure 2 et une surface intérieure 3.

En position de rangement, le pare-soleil 1 est placé en dehors du champ de vision du passager. La surface intérieure 3 est relevée vers le pavillon 11 du véhicule 10 de façon à ce que le pare-soleil soit sensiblement parallèle au pavillon 11.

En position d'utilisation, le pare-soleil 1 est disposé dans le champ de vision du passager. Généralement, le pare-soleil 1 est sensiblement perpendiculaire au pavillon. La surface extérieure 2 est visible depuis l'extérieur du véhicule au travers du pare-brise 12 et la surface intérieure 3 est visible pour le passager dans le véhicule 10.

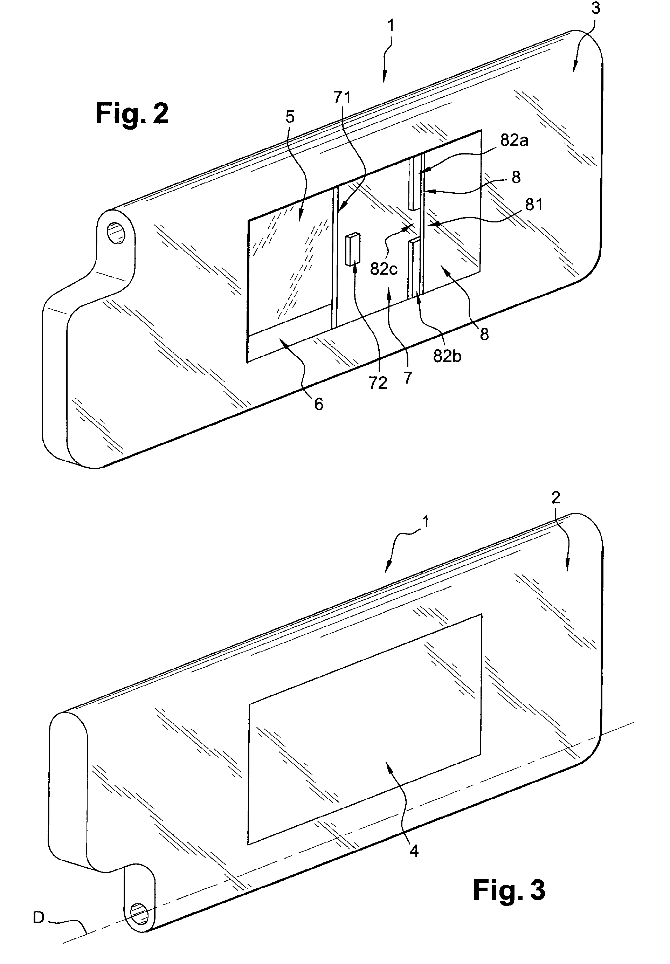

Tel que représenté à la figure 2 et à la figure 3, le pare-soleil 1 dispose d'un compartiment de rangement 5. Ce dernier comporte un fond 4 et une ouverture 6. Le fond 4 constitue une partie de la surface extérieure 2 et l'ouverture 6 a été réalisée dans la surface intérieure 3.

Le fond 4 est choisi dans une matière transparente, par exemple, il peut être en matière plastique.

Tel que représenté à la figure 2, l'ouverture 6 du compartiment de rangement 5 est recouverte d'un miroir de courtoisie 7 en position de non utilisation du compartiment de rangement 5. L'ouverture 6 peut également être fermée uniquement par un couvercle 8 escamotable ou coulissant. Le miroir 7 est situé entre le fond 4 et l'ouverture 6.

Dans le mode de réalisation décrit, le miroir 7 est animé d'un mouvement de coulissement transversal mais il peut également être escamotable, par exemple, par rotation au moyen d'une charnière.

Le miroir 7 peut être recouvert d'un couvercle 8 en position de non utilisation du miroir 7. Le couvercle 8 est animé d'un mouvement de coulissement transversal. Le couvercle 8 peut aussi être escamotable, par exemple, par rotation au moyen d'une charnière.

De façon à ouvrir ou fermer le couvercle 8, ce dernier comporte, à l'une de ses extrémités 81, un moyen de préhension, qui forme une butée 72. Cette dernière est sensiblement perpendiculaire à l'axe D. Elle comporte deux parties 82a, 82b séparées en partie par une découpe 82c. Cette découpe 82c est délimitée par les deux parties 82a, 82b et l'extrémité 81 du couvercle 8. Grâce à la préhension de la butée 82 ou l'une des parties 82a, 82b, le passager peut faire coulisser transversalement le couvercle 8.

De façon à accéder au compartiment de rangement 5, le miroir 7 comporte, à l'une de ses extrémités 71, un moyen de préhension, qui est une protubérance 72. Cette dernière est perpendiculaire à l'axe D. De plus, elle est dimensionnée de façon à pouvoir loger dans la découpe 82c, lors des coulissements du miroir 7 et du couvercle 8. Ainsi, le passager peut alors ouvrir ou fermer le compartiment de rangement 5 directement par préhension de la protubérance 72 de façon à faire coulisser en même temps le couvercle 8 et le miroir 7. Le passager peut également utiliser ou protéger le miroir de courtoisie 7 par préhension de la butée 82 de façon à faire coulisser le couvercle 8.

Le mouvement de coulissement du miroir 7 et celui du couvercle 8 sont indépendants.

Le compartiment de rangement 5 permet le rangement de petits objets utilitaires, des papiers et en particulier un ticket de stationnement qui restent visible à travers le pare-brise 12 quand le pare-soleil 1 est en position d'utilisation ou un ticket de télépéage nécessaire pour la lecture optique des abonnements.

Cette invention n'est pas limitée au mode de réalisation décrit et illustré qui a été donné à titre d'exemple.

L'invention peut, par exemple, être appliquée à un cabriolet.

L'invention peut comporter une paroi mobile opaque pourvu d'un moyen de préhension entre le fond 4 transparent et l'ouverture 6 de façon à dissimuler le contenu du compartiment de rangement 5 tout en offrant la possibilité de visualiser l'objet à travers le pare-brise 12.

## Revendications

1. Pare-soleil (1) pour véhicule automobile (10) :
- monté mobile autour d'au moins un axe (D) positionné transversalement dans le véhicule (10)
- entre une position de rangement dans laquelle le pare-soleil (1) est hors du champ de vision du passager du véhicule (10),
- et une position d'utilisation dans laquelle le pare-soleil (1) est dans le champ de vision du passager du véhicule (10),
- comportant une surface intérieure (3) et une surface extérieure (2),
- comportant un compartiment de rangement (5), qui dispose d'un fond (4) et d'une ouverture (6),
**caractérisé en ce que** le fond (4) est transparent afin de rendre visible depuis l'extérieur du véhicule (10) un objet introduit dans le compartiment de rangement (5).

2. Pare-soleil (1) selon la revendication 1, **caractérisé en ce que** le fond (4) du compartiment de rangement (5) est la partie transparente.

3. Pare-soleil (1) selon la revendication 2, **caractérisé en ce que** le fond (4) du compartiment de rangement (5) constitue une partie de la surface extérieure (2).

4. Pare-soleil (1) selon l'une des revendications quelconques 1 à 3, **caractérisé en ce que** le pare-soleil (1) comporte sur sa surface intérieure (3) un miroir (7) destiné à recouvrir l'évidemment (5) lorsque le compartiment de rangement (5) est en position de non utilisation.

5. Pare-soleil (1) selon la revendication 4, **caractérisé en ce que** le miroir (7) a un mouvement de coulissement de façon à ouvrir ou fermer l'accès au compartiment de rangement (5).

6. Pare-soleil (1) selon la revendication 4 ou 5, **caractérisé en ce qu'**un couvercle (8) est destiné à recouvrir le miroir (7) lorsque le miroir (7) est en position de non utilisation.

7. Pare-soleil (1) selon la revendication 6, **caractérisé en ce que** le couvercle (8) a un mouvement de coulissement de façon à accéder ou non au miroir (7).
